# EUROPÄISCHE PATENTANMELDUNG

(11) **EP 0 687 546 A2**
(43) Veröffentlichungstag der Anmeldung: **20.12.1995**
(21) Anmeldenummer: 95106615.8
(22) Anmeldetag: 03.05.1995
(51) Int. Cl.: B29C 49/20, B29C 70/74, B29D 22/00, B01D 53/04, B60K 15/035

(54) **Herstellverfahren für einen Hohlkörper mit einem innenliegenden Stützrahmen**

(30) Priorität: 15.06.1994 DE 4420879
(71) Anmelder: FILTERWERK MANN & HUMMEL GMBH, D-71631 Ludwigsburg (DE)
(72) Erfinder: Andress,Heinz, D-71729 Erdmannhausen (DE); Klotz, Arthur, D-71686 Remseck (DE); Kuhn, Arnold, D-79379 Müllheim (DE)
(74) Vertreter: Voth, Gerhard, Dipl.-Ing.

(57) **Zusammenfassung**

Die Erfindung betrifft einen Hohlkörper mit einem innen liegenden Stützrahmen. Dieser Stützrahmen 10 ist an wenigstens zwei Anlagepunkten mit einem Gehäuse 14 verbunden. Gehäuse 14 und Stützrahmen 10 bestehen aus Kunststoff, wobei das in Blasformtechnik hergestellte Gehäuse 14 den Stützrahmen 10 umschließt.

## Beschreibung

Die Erfindung betrifft einen Hohlkörper, welcher in Blasformtechnik hergestellt ist. Aus dem Patent Abstract JP 40 04 123 ist ein in Blasformtechnik hergestelltes Gehäuse bekannt. Dieses dient zur Luftführung bei Verbrennungskraftmaschinen und wird üblicherweise auch als Saugrohr bezeichnet.

Zur Herstellung des Saugrohrs wird ein schlauchförmiger Kunststoffkörper in ein zweiteiliges Werkzeug eingeführt, das Werkzeug geschlossen und der Innenraum des Kunststoffkörpers mit Druckluft beaufschlagt. Damit bildet der Kunststoffkörper die dem Werkzeug entsprechende Kontur aus. Nach Erstarren des Kunststoffs kann das Teil entnommen und mit den entsprechenden Anschlüssen versehen werden.

Die Blasformtechnik hat den Vorteil, daß auch komplizierte Strukturen relativ einfach herzustellen sind, insbesondere aber auch Formen wie Behälter u.ä. hergestellt werden können, die in normaler Kunststoffspritzgießtechnik nicht entformbar sind. Ein Nachteil der bisher bekannten, in Blasformtechnik hergestellten Teile war die geringe Stabilität. Bei einem einfachen Behälter spielt dies nur eine untergeordnete Rolle. Bei komplizierten Teilen bzw. Behältern, die erhöhten Anforderungen hinsichtlich Formstabilität genügen müssen, ist die Blasformtechnik nur bedingt einsetzbar.

Der Erfindung liegt die Aufgabe zugrunde, ein Gehäuse in Blasformtechnik zu schaffen, das eine hohe Formstabilität aufweist. Diese Aufgabe wird verfahrensmäßig durch die Merkmale des Anspruchs 1 sowie durch die Merkmale des Anspruchs 2 gelöst.

Der wesentliche Vorteil der Erfindung liegt darin, daß zunächst ein Stützrahmen hergestellt wird. Dieser kann beispielsweise ein Kunststoffspritzgußteil sein. Dieser Stützrahmen wird in eine Blasform eingebracht und der Kunststoffschlauch über den Stützrahmen gezogen. Durch Schließen des Werkzeugs, in dem sich der Stützrahmen befindet, wird die äußere Kontur des Gehäuses festgelegt. Durch Beaufschlagung mit Druckluft legt sich der Kunststoffschlauch an die Kontur des Werkzeugs an. Gleichzeitig verbindet sich der Kunststoffschlauch mit dem Stützrahmen an den vorher definierten Anlagepunkten und bildet so eine Einheit.

Zur Verbesserung der Verbindung zwischen Stützrahmen und Anlagepunkten kann der Stützrahmen mit Abflachungen, wulstförmigen Auskragungen oder ähnlichem versehen sein. Diese Elemente werden von dem geblasenen Schlauch umschlossen.

Gemäß einer weiteren Ausgestaltung der Erfindung wird durch eine geeignete Materialtemperatur während des Fertigungsprozesses dafür gesorgt, daß eine kohäsive Verbindung zwischen Gehäuse und Stützrahmen erzielt wird. Der Stützrahmen kann auch Längsstege aufweisen. Er ist an die Erfordernisse bezüglich Festigkeit und evtl. auch an Erfordernisse bezüglich der Innengestaltung des Gehäuses in einfacher Weise anpaßbar. Verwendung findet ein in dieser Weise hergestelltes Gehäuse beispielsweise im Automobilbau als Aktivkohlebehälter wobei in diesem Fall das Gehäuse mit geeigneten Deckeln verschlossen wird. Ein solcher Aktivkohlebehälter dient dazu, Kraftstoffdämpfe zu absorbieren.

Eine weitere Verwendung im Automobilbau ist die Schaffung von Resonatorräumen. Es ist bekannt, daß die Motorpulsation zu Ansauggeräuschen führt, die mit entsprechenden Maßnahmen gedämpft werden müssen. Hier haben sich die Resonatoren bewährt. Ein solcher Resonator kann beispielsweise ein Formkörper sein, der in einem ungenutzten Hohlraum im Bereich des Motorraumes angeordnet ist. Dabei kann der Stützrahmen zusätzliche Aufgaben übernehmen, z.B. die Schaffung von besonders ausgestalteten Innenräumen oder die Herstellung von akustisch besonders günstigen Durchlässen, wie z.B. ein akustischer Hals.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt:
- Figur 1: einen Schnitt durch ein in Blasformtechnik hergestellten Hohlkörper,
- Figur 2: eine weitere Schnittdarstellung eines Hohlkörpers,
- Figur 3: einen Hohlkörper in der Verwendung als Aktivkohlefilter.

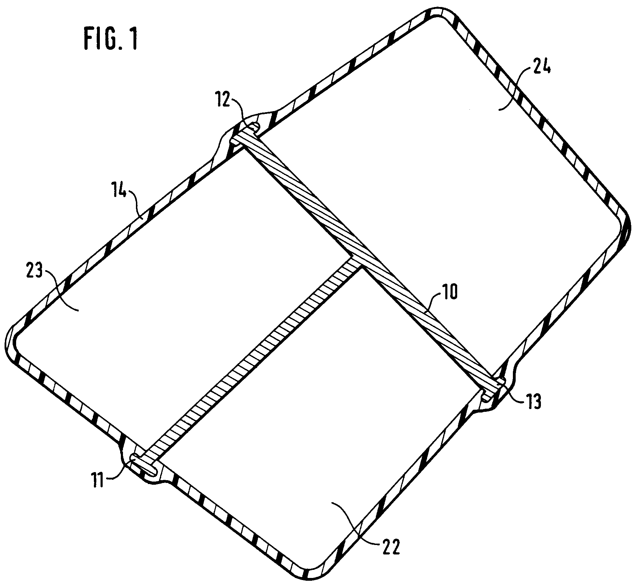

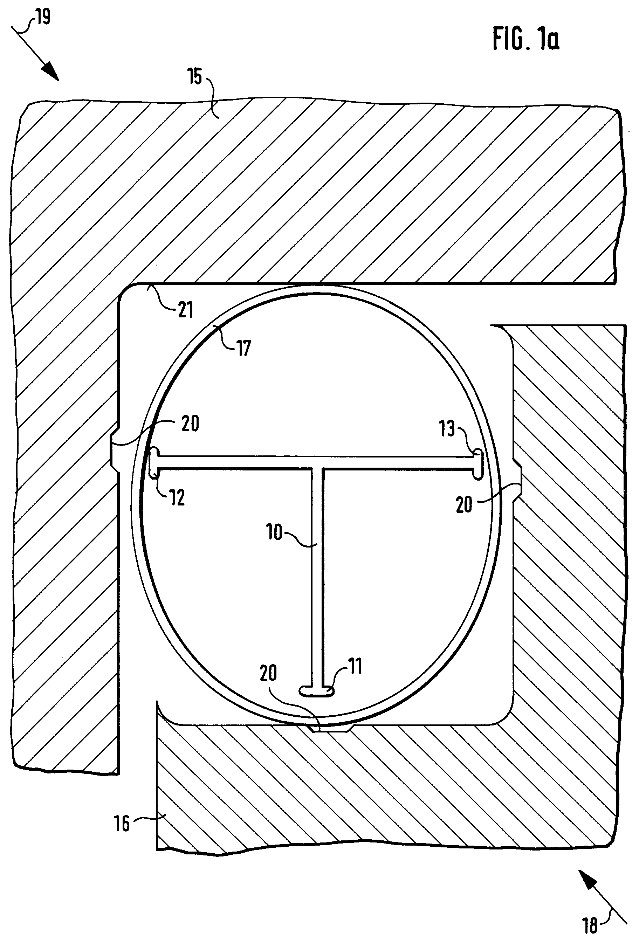

Die Figur 1 zeigt einen Schnitt eines Hohlkörpers, der in Blasformtechnik hergestellt ist. Er besteht aus einem Stützrahmen 10, der an seinen äußeren Enden Abplattungen 11, 12, 13 aufweist. Dieser Stützrahmen ist umgeben von dem Gehäuse 14, dessen Außenkontur dargestellt ist.

In Figur 1a sind die Verfahrensschritte zur Herstellung dieses Hohlkörpers gezeigt. Zunächst wird in einem offenen Formwerkzeug mit den beiden Werkzeughälften 15, 16 der Stützrahmen 10 eingebracht. Der Stützrahmen 10 wird mit geeigneten Mitteln in der dargestellten Lage fixiert. Anschließend wird der vorgeformte Schlauch 17, welcher sich in einem noch nicht endgültig ausgehärteten Zustand befindet, über den Stützrahmen 10 geführt und das Werkzeug gemäß den Pfeilen 18, 19 geschlossen. Dabei gelangen die Abplattungen 11, 12, 13 in die Vertiefungen 20 der beiden Werkzeughälfen, wobei damit gleichzeitig auch der Schlauch 17 in die Vertiefungen eingedrückt wird.

Nach dem Schließen des Werkzeugs wird der Innenraum des Schlauches mit Druckluft beaufschlagt. Dieser legt sich somit an die Werkzeuginnenkontur 21 an. Nach dem Abkühlen des Schlauchs wird dieser auf die gewünschte Länge des Gehäuses abgeschnitten, der Innendruck reduziert und das Werkzeug geöffnet. Das fertige Gehäuse kann entnommen werden. Während der Formgestaltung des Gehäuses legt sich, wie in Figur 1 gezeigt, der Schlauch um die Abplattungen 11, 12, 13 und bildet somit eine formschlüssige Verbindung. Außerdem erfolgt durch das Anschmelzen der Abplattungen aufgrund der Temperatur des Schlauches eine koesive Verbindung zwischen Stützrahmen und Schlauch. Der Stützrahmen bildet, wie in Figur 1 gezeigt, gleichzeitig drei Kammern 22, 23, 24 aus. Diese Kammern sind aufgrund der Verbindung von Stützrahmen und Gehäuse gegeneinander abgedichtet.

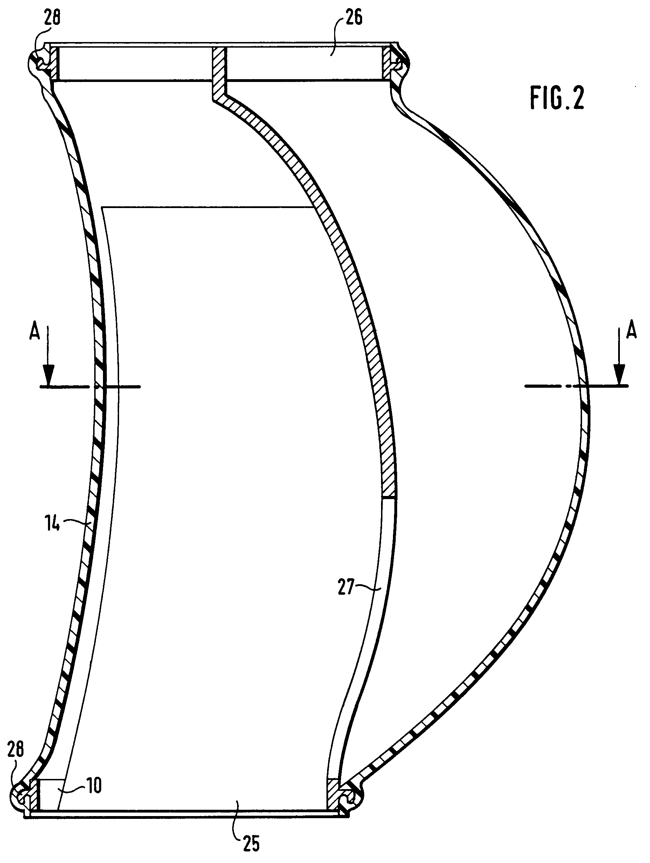

Figur 2 zeigt in einer Schnittdarstellung, die um 90° gegenüber der Schnittdarstellung gemäß Figur 1 geschwenkt ist, den Stützrahmen 10 und das Gehäuse 14. Hier ist erkennbar, daß der Stützrahmen auch an den beiden Gehäuseöffnungen 25, 26 mit umlaufenden Haltenasen 28 versehen ist, wobei der Schlauch bzw. das Gehäuse 14 diese Haltenasen umschließt und damit eine innige Verbindung erzielt wird. Der Stützrahmen 10 ist im unteren Bereich mit einer Öffnung 27 versehen. Diese Öffnung dient zur definierten Verbindung zwischen Kammer 24 und 23.

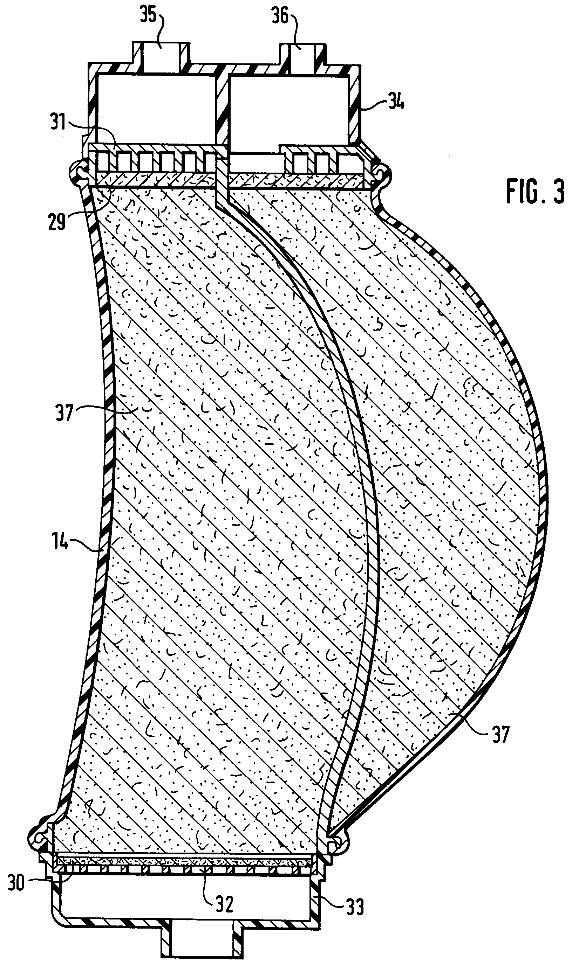

Die Figur 3 zeigt ein Gehäuse, das als Aktivkohlefilter verwendet wird. Ein solches Aktivkohlefilter dient zur Kraftstofftankentlüftung und besteht aus einem Aktivkohlepaket 37, das in einem Gehäuse aus Kunststoff angeordnet ist, wobei das Gehäuse leitungsmäßig über Stutzen mit dem Kraftstofftank, mit dem Saugrohr eines Verbrennungsmotors sowie mit der Atmosphäre in Verbindung steht. Ein solches Aktivkohlefilter ist beispielsweise aus der DE-PS 24 07 128 bekannt.

Das Gehäuse 14 ist in seinen verschiedenen Kammern mit Aktivkohle 37 befüllt. An den beiden Öffnungen ist jeweils ein Filterschaum 29, 30 zur Verhinderung des Austritts von Aktivkohle sowie einem Lochdeckel 31 und einem weiteren Lochdeckel 32 versehen. Die Öffnungen werden abgeschlossen durch einen Boden 33, der mit einem Ventil bzw. einer geeigneten Öffnung versehen ist sowie einem Deckel 34, der ebenfalls Öffnungen 35, 36 aufweist. Der Vorteil des in Blasformtechnik hergestellten Gehäuses für ein Aktivkohlefilter liegt darin, daß sich die Außenkontur an einen vorgegebenen Einbauraum optimal anpassen kann und damit die Möglichkeit besteht, platzsparend ein solches Aktivkohlefilter in einem Fahrzeug anzuordnen.

Selbstverständlich ist die Erfindung nicht auf die Verwendung des Gehäuses für ein Aktivkohlefilter beschränkt. Es gibt eine Vielzahl von Anwendungsmöglichkeiten, bei denen ein Gehäuse an eine komplizierte Kontur angepaßt werden muß bzw. bei dem ein Gehäuse mit einer bestimmten Kammerstruktur versehen werden muß.

### Bezugszeichenliste

- 10: Stützrahmen
- 11: Abplattung
- 12: Abplattung
- 13: Abplattung
- 14: Gehäuse
- 15: Werkzeug
- 16: Werkzeug
- 17: Schlauch
- 18: Pfeil
- 19: Pfeil
- 20: Vertiefung
- 21: Innenkontur
- 22: Kammer
- 23: Kammer
- 24: Kammer
- 25: Öffnung
- 26: Öffnung
- 27: Bereich
- 28: Haltenasen
- 29: Filterschaum
- 30: Filterschaum
- 31: Lochdeckel
- 32: Lochdeckel
- 33: Boden
- 34: Deckel
- 35: Öffnung
- 36: Öffnung
- 37: Aktivkohle

## Patentansprüche

1. Herstellverfahren für einen Hohlkörper mit einem innenliegenden Stützrahmen (10) und einem Gehäuse (14), wobei wenigstens das Gehäuse (14) aus Kunststoff besteht und der Stützrahmen (10) an wenigstens zwei Anlagepunkten mit dem Gehäuse (14) in Verbindung steht, wobei der Stützrahmen (10) in ein Blasformwerkzeug eingebracht wird, das Gehäuse (14) in Blasformtechnik hergestellt, über den Stützrahmen (10) geführt und durch Schließen des Werkzeugs (15, 16) mit dem Stützrahmen (10) zu einer Einheit verbunden wird.

2. Hohlkörper mit einem innen liegenden Stützrahmen (10), wobei der Stützrahmen an wenigstens zwei Anlagepunkten mit einem Gehäuse (14) verbunden ist und wobei das Gehäuse (14) aus Kunststoff besteht und in Blasformtechnik hergestellt ist und den Stützrahmen (10) umschließt.

3. Hohlkörper nach Anspruch 2, wobei der Stützrahmen (10) an den Anlagepunkten eine Verbreiterung (11, 12, 13) aufweist und diese Verbreiterung durch die Gehäusekontur zumindest teilweise umschlossen ist.

4. Hohlkörper nach Anspruch 3, wobei der Stützrahmen (10) mit dem Gehäuse (14) an den Anlagepunkten kohäsiv verbunden ist.

5. Hohlkörper nach einem der vorhergehenden Ansprüche, wobei der Stützrahmen (10) über Längsstege mit dem Gehäuse (14) verbunden ist.

6. Hohlkörper nach einem der vorhergehenden Ansprüche, gekennzeichnet durch die Verwendung als Aktivkohlebehälter, wobei die offenen Enden jeweils mit einem Deckel (31, 32) versehen sind und in wenigstens einem der Deckel Anschlußelemente (35, 36) vorgesehen sind.

7. Hohlkörper nach einem der Ansprüche 1 bis 5, gekennzeichnet durch die Verwendung als Resonatorraum für die Dämpfung des Ansauggeräuschs eines Verbrennungsmotors.
